# EUROPÄISCHE PATENTSCHRIFT

(11) **EP 2 399 812 B1**
(45) Veröffentlichungstag und Bekanntmachung des Hinweises auf die Patenterteilung: **07.11.2018**
(21) Anmeldenummer: 11158424.9
(22) Anmeldetag: 16.03.2011
(51) Int. Cl.: B62K 21/02, B62K 25/02

(54) **Fahrradgabel**
Bicycle fork
Fourche de vélo

(30) Priorität: 24.06.2010 DE 202010009492 U
(43) Veröffentlichungstag der Anmeldung: 28.12.2011
(73) Patentinhaber: Canyon Bicycles GmbH, 56073 Koblenz (DE)
(72) Erfinder: Thoma, Vincenz, 56068 Koblenz (DE)
(74) Vertreter: dompatent von Kreisler Selting Werner - Partnerschaft von Patent- und Rechtsanwälten mbB

(56) Entgegenhaltungen:
- EP-A1- 2 058 217
- DE-C- 676 693

## Beschreibung

Die Erfindung betrifft eine Fahrradgabel insbesondere eine Rennrad-Fahrradgabel.

Fahrradgabeln, die bei modernen Rennrädern, insbesondere im hochqualitativen Bereich häufig aus Karbon oder anderen faserverstärkenden Kunststoffen hergestellt sind, sind für das Fahrverhalten eines Fahrrads von erheblicher Bedeutung. Neben der Flexibilität der Fahrradgabel ist die Vorbiegung der Gabel für das Fahrverhalten des Fahrrads von entscheidender Bedeutung. Durch die Vorbiegung der Gabel wird der Nachlauf des vorderen Laufrads, bzw. des Vorderrads verstellt, Der Nachlauf ist der Abstand zwischen dem tatsächlichen Berührpunkt des Vorderrads auf der Fahrbahn bei Geradeausfahrt zu dem theoretischen Berührpunkt, der durch die Verlängerung der Gabelschaftachse definiert ist. Da Fahrradgabeln üblicher Weise nach vorne gekrümmt ausgebildet sind, entsteht ein entsprechender Nachlauf, wobei die Achse des Vorderrads gegenüber der Längsachse des Gabelschafts nach vorne, d. h. in Fahrtrichtung verschoben wird. Ein entsprechendes Verschieben der Fahrradachse nach vorne erfolgt selbstverständlich auch durch ein Neigen der Gabelrohre nach vorne gegenüber der Gabelschaftachse.

Liegt die Achse des Vorderrads in Fahrtrichtung weiter vorne, d. h. wenn die Gabel eine größere Vorbiegung aufweist, so ergibt sich ein kleinerer Nachlauf.

Hierdurch ist das Fahrrad wendiger. Liegt die Achse in Fahrtrichtung weiter hinten, d. h. näher an der Längsachse des Gabelschafts, so weist die Fahrradgabel eine geringere Vorbiegung auf. Dies hätte einen größeren Nachlauf zur Folge, sodass das Fahrrad ruhiger läuft. Dies ist insbesondere bei schnellen Bergabfahrten von Vorteil.

Aus EP 2 058 217 ist eine Vorderradnabe bekannt, die einen in unterschiedlichen Positionen fixierbaren Ansatz aufweist. Hierdurch kann die Lage der Achse relativ zu einem Ausfallende einer Fahrradgabel variiert werden, wobei das Ausfallende der Gabel eine unveränderte Ausnehmung aufweist. Durch Verändern der Fahrradnabe kann somit der Nachlauf verändert werden.

Aufgabe der Erfindung ist es, eine Fahrradgabel zu schaffen, durch die eine Verbesserung des Fahrverhaltens des Fahrrads erzielt werden kann.

Die Lösung der Aufgabe erfolgt erfindungsgemäß durch eine Fahrradgabel gemäß Anspruch 1.

Durch die erfindungsgemäße Fahrradgabel ist ein Verändern der Vorbiegung bzw. ein Verändern des Nachlaufs möglich. Durch die erfindungsgemäße Fahrradgabel ist somit ein Einstellen des Fahrverhaltens des Fahrrads möglich.

Die erfindungsgemäße Fahrradgabel weist zwei über eine Fahrradbrücke miteinander verbundene Gabelbeine auf. Die Fahrradbrücke ist vorzugsweise mit einem Gabelschaft verbunden. Insbesondere handelt es sich um eine einstückig ausgebildete Fahrradgabel aus faserverstärktem Kunststoff wie Karbon. Die beiden Gabelbeine weisen an den jeweiligen Ausfallenden eine Ausnehmung zur Aufnahme einer Vorderradachse auf. Bei den Ausnehmungen handelt es sich üblicher Weise um nach unten, d. h. in Richtung der Fahrbahn offene Schlitze, sodass die Vorderradachse von unten eingesteckt und insbesondere über einen Schnellspanner in den Ausfallenden der Fahrradgabel fixiert werden kann. Erfindungsgemäß sind die Ausnehmungen derart ausgebildet, dass es möglich ist, die Vorderradachse, insbesondere in Rahmenlängsrichtung, d. h. in Fahrtrichtung in mindestens zwei unterschiedlichen Positionen zu fixieren. Hierdurch ist es beispielsweise möglich, die Fahrradachse in einer ersten vorderen und einer zweiten hinteren Position in den Ausnehmungen zu fixieren. Durch die Fixierung in der vorderen Position wird eine Fahrradgabel mit größerer Vorbiegung und somit kleinerem Nachlauf realisiert. Hierdurch wird die Wendigkeit des Fahrrads erhöht. Beim Fixieren der Vorderradachse in einer hinteren Position wird die Vorbiegung verringert, bzw. der Nachlauf größer. Hierdurch erhöht sich die Laufruhe des Fahrrads.

Erfindungsgemäß ist jeweils in den Ausnehmungen ein Positionierelement angeordnet. Hierbei weisen die Ausnehmungen zumindest teilweise eine größere Breite als der Durchmesser der Vorderradachse auf. Das Positionierelement ist derart ausgebildet, das es eine definierte Position der Vorderradachse gewährleistet. Die Positionierelemente sind aus den Ausnehmungen herausnehmbar und beispielsweise durch andere Positionierelemente austauschbar. Die unterschiedlichen Positionierelemente sind hierbei derart ausgebildet, dass hierdurch unterschiedliche Positionen der Vorderradachse realisiert sind. Hierzu weisen die Positionierelemente vorzugsweise Öffnungen, die insbesondere schlitzförmig ausgebildet sind, auf. Durch die zwei Öffnungen kann die Vorderradachse hindurch gesteckt oder von unten eingeschoben werden. Die Öffnungen der Positionierelemente bilden somit die herkömmlichen Ausnehmungen von Ausfallenden bei Fahrradgabeln aus. Die Positionierelemente sind hierbei vorzugsweise derart ausgebildet, dass sie die erfindungsgemäß vergrößerten Ausnehmungen an den Ausfallenden insbesondere vollständig ausfüllen. Durch einfaches Austauschen der Positionierelemente können somit unterschiedliche Positionen der Vorderradachse und damit ein unterschiedlicher Nachlauf der Vorderradachse auf einfache Weise realisiert werden. Je nach Vorliebe des Benutzers und/oder nach aktuellem Einsatzzweck des Fahrrads kann somit auf einfache Weise eine Anpassung des Fahrverhaltens erfolgen.

Ferner haben die Ausnehmungen zumindest in dem Bereich, in dem die Vorderradachse fixiert wird, eine Breite, d. h. eine Ausdehnung in Rahmenlängsrichtung, die größer ist als der Durchmesser der Vorderradachse. Hierdurch ist es möglich, die Vorderradachse innerhalb der Ausnehmung in Rahmenlängsrichtung zu verschieben. Je nach Positionierung der Vorderradachse kann die verbleibende Ausnehmung durch ein Sicherungselement oder dergleichen verschlossen werden. Beispielsweise kann ein entsprechend geformtes aus Kunststoff oder einer Metalllegierung hergestelltes Teil in die verbleibende Ausnehmung eingesteckt werden um ein ungewolltes Verschieben der Vorderradachse in die jeweils andere Position zu vermeiden. Bei dieser Ausführungsform sind die Ausnehmungen derart ausgebildet, dass es sich um nach unten offene, schlitzförmige Ausnehmungen handelt, die über ihre gesamte Breite eine größere Breite als den Durchmesser der Vorderradachse aufweisen.

Erfindungsgemäß sind die Positionierelemente derart ausgebildet, dass ein und dasselbe Positionierelement in unterschiedlichen Stellungen in die Ausnehmung der Ausfallenden eingesetzt werden kann. Insbesondere ist es hierbei möglich, das Positionierelement um 180° zu drehen, sodass in der einen Lage des Positionierelements eine Öffnung zur Aufnahme der Vorderradachse weiter vorne und in einer anderen Lage weiter hinten angeordnet ist. Ein entsprechendes Anordnen der Positionierelemente in unterschiedlichen, um 180° gedrehten Positionen können insbesondere auch durch ein Vertauschen des in Fahrtrichtung linken und rechten Positionierelements bei gleichzeitigem Drehen um 180° um eine im Wesentlichen vertikale Achse erfolgen.

Die Positionierelemente sind vorzugsweise jeweils über ein Befestigungselement wie einer Schraube in dem jeweiligen Ausfallende der Gabelbeine fixiert. Eine Befestigung kann beispielsweise auch über Befestigungselemente wie Rastelemente und dergleichen erfolgen. Insbesondere zur Versteifung der Ausfallenden der Gabelbeine ist in diesem vorzugsweise jeweils ein die Ausnehmung ausbildender Einsatz bzw. Halteelement der vorzugsweise aus Metall hergestellt ist, vorgesehen. Insbesondere in dem Einsatz bzw. Halteelement kann eine sichere Befestigung des entsprechenden Positionierelements erfolgen. Insbesondere kann der Einsatz bzw. Halteelement eine Gewindebohrung aufweisen, in die eine Schraube zur Befestigung des Positionierelements einschraubbar ist. Das beispielsweise aus Aluminium hergestellte Halteelement kann ferner einen Gewindeeinsatz wie eine Heli-Coils aufweisen, um eine häufige Montage zu ermöglichen. Das Positionierungselement wie die Schraube ist hierbei vorzugsweise derart angeordnet, dass es von unten in das Halteelement eingeschraubt, bzw. in diesem fixiert wird. Der Schraubenkopf hält hierbei das Positionierelement, wobei der Schraubenkopf vorzugsweise in einer Senkbohrung angeordnet ist, sodass ein Anliegen der Vorderradachse an dem Schraubenkopf vermieden ist.

Bei einer besonders bevorzugten Ausführungsform ist das Positionierelement in Seitenansicht im Wesentlichen L-förmig bzw. hakenförmig ausgebildet. Bei einem in die Ausnehmung eingesetzten Positionierelement ist ein Schenkel im Wesentlichen vertikal ausgerichtet und der andere obere Schenkel im Wesentlichen horizontal ausgerichtet. Somit entsteht erst, wenn das Positionierelement in die insbesondere schlitzförmige Ausnehmung eingesetzt ist, der Schlitz zur Aufnahme der Vorderradachse. Der Schlitz ist somit einerseits seitlich durch eine Seitenwand des vertikalen Schenkels des Positionierelements und andererseits durch eine Seitenwand der Ausnehmung begrenzt. Bei der bevorzugten Ausführungsform bildet die obere Anlagefläche der Vorderradachse den vertikalen Schenkel des Positionierelements,

Dies hat den Vorteil, dass in diesem Bereich, d. h. im Bereich des horizontalen Schenkels, das Befestigungselement für die Schrauben vorgesehen werden kann. Die im Querschnitt im Wesentlichen L-förmige Ausgestaltung der Positionierelemente hat somit einerseits den Vorteil, dass das Positionierelement eine geringe Breite aufweist, da die Seitenwände der schlitzförmigen Ausnehmung für die Achse nicht durch das Positionierelemente gebildet werden müssen. Zusätzlich weist die L-förmige Ausgestaltung der Positionierelemente den Vorteil auf, dass eine einfache Befestigung über den im Wesentlichen horizontalen Schenkel insbesondere in den Ausfallenden vorgesehenen Halteelementen aus Metall möglich ist.

Vorzugsweise weisen die Positionierelemente, insbesondere der horizontale Schenkel bei einer im Wesentlichen L-förmigen Ausgestaltung eine bogenförmige, insbesondere kreisförmige Achs-Anlagefläche auf. Diese in Seitenansicht insbesondere kreisbogenförmige Achs-Anlagefläche dient zur flächigen Anlage der Vorderradachse. Der Bogen der Achs-Anlagefläche liegt hierbei beispielsweise im Bereich von 90° - 180° insbesondere 120° - 140°. In besonders bevorzugter Ausführungsform weist das Positionierelement im Bereich der Anlagefläche eine Durchgangsbohrung zum Durchführen des Befestigungselements mit der Schraube auf. Die Durchgangsbohrung ist somit vorzugsweise im Wesentlichen vertikal ausgerichtet und weist vorzugsweise eine Vertiefung zur Aufnahme des Schraubenkopfs auf. Bevorzugt ist hierbei die Verwendung von Inbusschrauben. Durch eine derartige Achsumschlingung ist eine sichere Positionierung der Vorderradachse gewährleistet. Insbesondere ist eine horizontale Ausrichtung der Vorderradachse gewährleistet.

Um ein sicheres Fixieren der Positionierelemente zu gewährleisten, ist es besonders bevorzugt, dass die Positionierelemente zwei, in Richtung der Gabelbrücke, d. h. nach oben aufeinander zu weisende Klemmflächen aufweisen. Die Breite des Positionierelements verringert sich somit nach oben. Die in den Ausfallenden bzw. in den Halteelementen vorgesehenen Ausnehmungen weisen vorzugsweise korrespondierende Klemmflächen auf.

Bei einem Einschieben eines Positionierelements von unten in die Ausnehmung kommen die Klemmflächen somit in Anlage. Durch Fixieren des Positionierelements mit Hilfe des Befestigungselements wie einer Schraube folgt ein formschlüssiges Verklemmen. Dies ist insbesondere der Fall, wenn es sich bei dem Befestigungselement um ein Element handelt, durch das das Positionierelement weiter nach oben in Richtung der Gabelbrücke gezogen bzw. geschoben wird. Dies erfolgt insbesondere durch eine Schraube, die in eine vertikale Bohrung im Ausfallende bzw. in dem Halteelement eingeschraubt wird. Zum Ausgleich von Fertigungstoleranzen und um ein sicheres Klemmen zu gewährleisten, ist zwischen einer Oberseite des Positionierelements und einer Innenseite der Ausnehmung ein Spalt vorgesehen. Das Positionierelement liegt somit mit seiner Oberseite nicht an der Innenseite der Ausnehmung, sondern ausschließlich an den Klemmflächen an.

Durch das Vorsehen des erfindungsgemäßen Positionierelements bzw. der entsprechenden Ausgestaltung der Ausnehmungen kann ein Verändern des Nachlaufs um mehr als 3 mm insbesondere mehr als 4 mm und besonders bevorzugt mehr als 5 mm erfolgen. Erfindungsgemäß erfolgt dies durch einfaches Drehen des Positionierelements um 180° um eine vertikale Achse, wobei vorzugsweise gleichzeitig ein Austausch des linken mit dem rechten Positionierelements vorgenommen wird.

Durch die erfindungsgemäße Möglichkeit der Veränderung des Nachlaufes sind die Fahreigenschaften des Fahrrads auf einfache Weise veränderbar, da bereits eine geringe Veränderung des Nachlaufs die Fahreigenschaften erheblich verändert. Insbesondere ist es somit möglich, durch die Veränderung des Nachlaufs die Fahrradkomponenten optimal aufeinander abzustimmen. Beispielsweise kann hierbei auch eine Anpassung an die Steifigkeit der Laufräder erfolgen. So kann es insbesondere vorteilhaft sein, bei Verwendung anderer Laufräder den Nachlauf anzupassen.

Nachfolgend wird die Erfindung anhand bevorzugter Aufführungsformen unter Bezugnahme auf die anliegenden Zeichnungen näher erläutert.

Es zeigen:
- Fig. 1: eine schematische Draufsicht einer Fahrradgabel,
- Fig. 2: eine schematische perspektivische Ansicht der Ausfallenden der Gabelbeine einer Fahrradgabel,
- Fig. 3: eine schematische teilweise geschnittene Seitenansicht eines Ausfallendes des Gabelbeins in Richtung des Pfeils III in Fig. 1,
- Fig. 4: eine schematische perspektivische Explosionszeichnung des Ausfallendes sowie des Positionierelements,
- Fign. 5 u. 6: eine schematische Seitenansicht eines Ausfallendes eines Gabelbeins einer Fahrradgabel einer alternativen Konfiguration, die nicht Teil der Erfindung ist, und
- Fig. 7: eine schematische Seitenansicht eines Ausfallendes eines Gabelbeins einer Fahrradgabel einer weiteren alternativen Konfiguration, die nicht Teil der Erfindung ist.

Eine Fahrradgabel, die insbesondere einstückig ausgebildet ist, weist einen Gabelschaft 10 auf. Über eine Gabelbrücke 12 ist der Gabelschaft 10 mit zwei Gabelbeinen 14 verbunden. An Ausfallenden 16 der Gabelbeine 14 erfolgt ein Befestigen der Vorderradachse des Vorderrads.

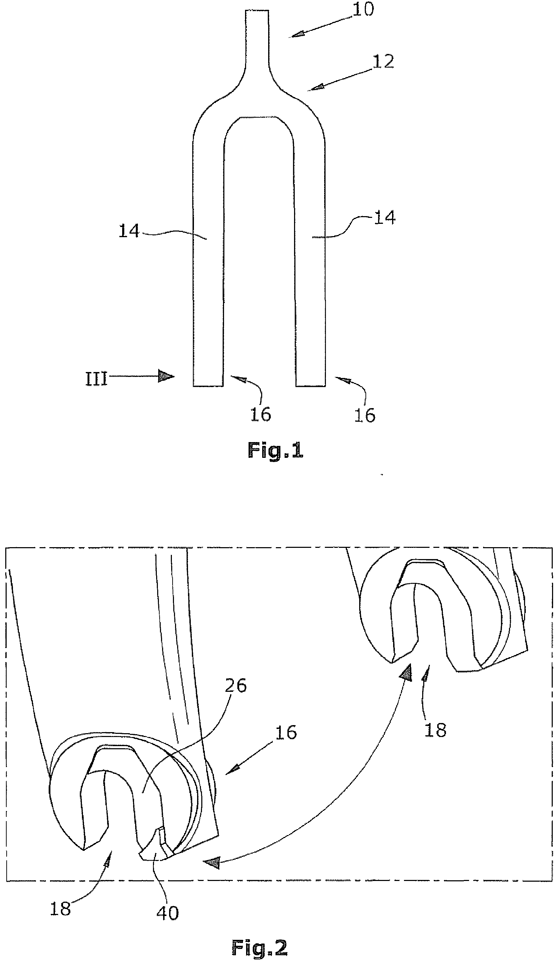

Bei einer ersten, besonders bevorzugten Ausführungsform der Erfindung (Fign. 2-4) ist in den Ausfallenden 16 eine Ausnehmung 18 vorgesehen.

Die Ausnehmung 18 ist im Wesentlichen durch die beiden Seitenwände 20 sowie eine Innenwand 22 definiert. Die Ausnehmungen 18 weisen in Rahmenlängsrichtung bzw. Fahrtrichtung 24 eine größere Breite b als herkömmliche Ausnehmungen an Ausfallenden einer Fahrradgabel auf. Hierdurch ist es bei dieser erfindungsgemäßen Ausführungsform möglich, in der Ausnehmung 18 ein Positionierelement 26 anzuordnen. Das Positionierelement 26 ist im Wesentlichen L-förmig bzw. hakenförmig ausgebildet. Durch das Positionierelement 26 wird die Ausnehmung 28 teilweise ausgefüllt, sodass eine im dargestellten Ausführungsbeispiel schlitzförmige nach unten offene Öffnung 28 ausgebildet ist. In die Öffnung 28 erfolgt von unten wie üblich ein Einstecken der Vorderradachse. Diese wird beispielsweise durch einen Schnellspanner fixiert, wobei die Innenseite des Schnellspanners, wie durch den Kreis 30 skizziert, einen Teil des Positionierelements 26 sowie auch einen Teil eines Halteelements 32 überdeckt. Das Halteelement 32 ist in dem Ausfallende 16 angeordnet und insbesondere aus Aluminium hergestellt. Bei Verwendung eines Schnellspanners fixiert dieser zusätzlich auch die Positionierelemente 26.

Das Positionierelement 26 umgibt die schlitzförmige Öffnung 28 zur Aufnahme der Vorderradachse nicht vollständig. Vielmehr ist die Öffnung 28 einerseits durch eine Seitenwand 34 eines im Wesentlichen vertikalen Schenkels des Positionierelements 26 ausgebildet. Ferner ist die Öffnung 28 durch die Innenwand 20 der Ausnehmung 18 ausgebildet. Eine Achs-Anlagefläche 36, die im dargestellten Ausführungsbeispiel kreisbogenförmig ausgebildet ist, bildet die obere Anlagefläche für die Vorderradachse.

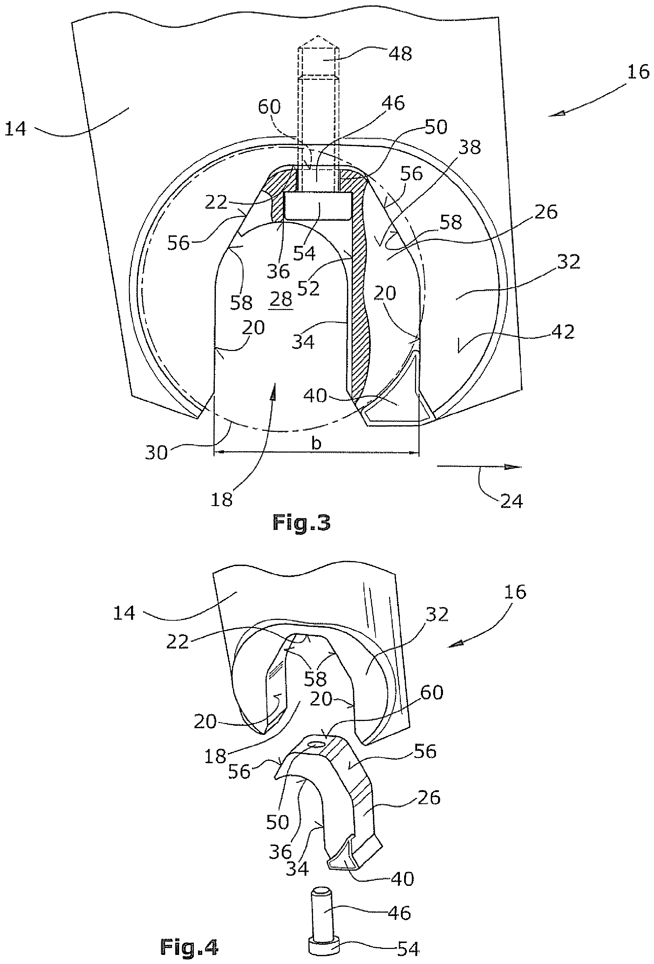

Zur Veränderung des Nachlaufs kann das Positionierelement 26 aus der Ausnehmung 18 in Fig. 3 nach unten herausgezogen, um 180° um eine vertikale Achse gedreht und wieder in die Ausnehmung 18 von unten eingesteckt werden. Der in Fig. 3 auf der rechten Seite vorgesehene vertikale Schenkel des Positionierelements 26 ist sodann auf der linken Seite angeordnet.

In dem bevorzugten dargestellten Ausführungsbeispiel weisen die Positionierelemente einen über eine Außenseite 38 des Positionierelements 26 vorstehenden Ansatz 40 auf. Der Ansatz 40, der auch über eine Außenseite 42 des Ausfallendes bzw. des Halteelements 32 vorsteht, dient dazu auch bei leicht gelöstem Schnellspanner ein Herausrutschen der Vorderradachse nach unten aus dem Schlitz 28 zu vermeiden. Dies ist dadurch realisiert, dass der durch den Kreis 30 skizzierte Teil des Schnellspanners an dem Ansatz 40 anliegt und erst bei sehr weit geöffnetem Schnellspanner das Vorderrad nach unten aus der Ausnehmung 28 herausgezogen werden kann.

Beim Ändern der Lage der Positionierelemente 26 erfolgt somit vorzugsweise nicht nur ein Drehen um 180°, sondern gleichzeitig auch ein Austauschen des linken und des rechten Positionierelements 26 wie in Fig. 2 durch den Pfeil 44 dargestellt. Hierdurch ist sichergestellt, dass der Ansatz 40 stets nach außen weist und seine entsprechende Sicherungsfunktion erfüllt.

Zum Fixieren der Positionierelemente 26 in den Halteelementen 32 sind im dargestellten Ausführungsbeispiel als Befestigungselemente jeweils Schrauben 46 vorgesehen. Die Schrauben 46 werden von unten in eine Gewindebohrung 48, die in dem Halteelement 32 angeordnet ist, eingeschraubt. Hierzu weist das Positionierelement 26 in einem im Wesentlichen horizontalen Schenkel eine Durchgangsbohrung 50 auf. Diese weist ferner eine Erweiterung 52 zur Aufnahme eines Schraubenkopfs 54 auf. Der Schraubenkopf 54 steht somit nicht über die Achs-Anlagefläche 36 vor.

Zum klemmenden Halten des Positionierelements 26 in der Ausnehmung 18 weist das Positionierelement zwei nach oben, d. h. in Richtung der Gabelbrücke 12 aufeinander zu weisende Klemmflächen 56 auf. Die Klemmflächen 56 liegen an korrespondierenden Klemmflächen 58 an. Um beim Einschrauben der Schraube 46 ein sicheres Klemmen des Positionierelements 26 sicherzustellen, ist ferner zwischen der Innenseite 22 der Ausnehmung 18 und der Oberseite 60 des Positionierelements 26 ein Spalt ausgebildet. Der Spalt weist vorzugsweise eine Spaltbreite von 0,1 bis 0,3 mm auf.

Zum Fixieren des Positionierelements 26 in der Ausnehmung 18 wird das Positionierelement 26 (Fig. 4) von unten in die Ausnehmung 18 eingesteckt. Anschließend erfolgt ein Hindurchstecken der Schraube 46 durch die Durchgangsöffnung 50 des Positionierelements und ein Einschrauben der Schraube 46 in die Gewindebohrung 48. Auf dieselbe Weise kann das Positionierelement 26 auch in einer um eine vertikale Achse um 180° gedrehten Stellung in der Ausnehmung 18 fixiert werden. Hierbei erfolgt vorzugsweise ein Tauschen des linken und rechten Positionierelements um zu gewährleisten, dass die Ansätze 40 nach außen vorstehen.

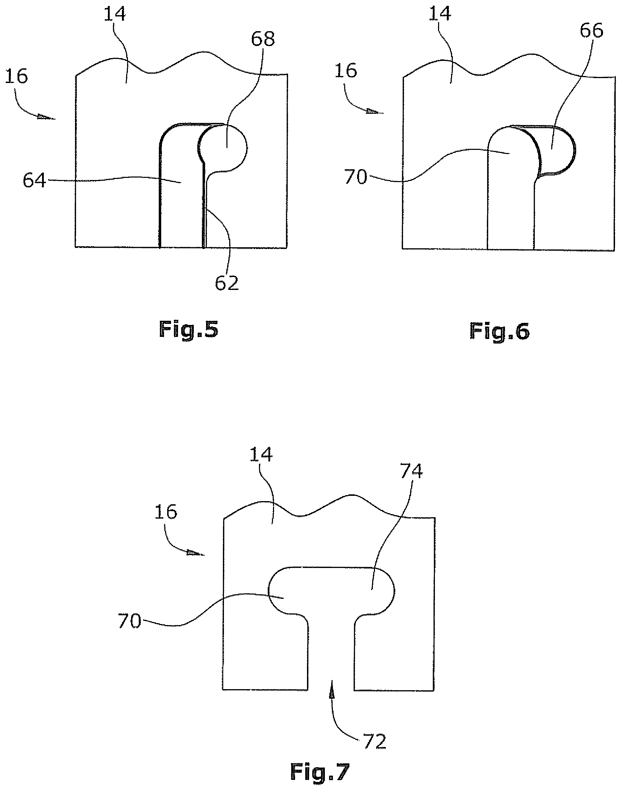

Bei einer alternativen Konfiguration (Fign. 5, 6), die nicht Teil der Erfindung ist, kann in einem Ausfallende 16 der Gabelbeine 14 auch eine in Seitenansicht P-förmige Ausnehmung 62 vorgesehen sein. In der Ausnehmung 62 kann ein Sicherungselement 64 (Fig. 5) und ein Sicherungselement 66 (Fig. 6) angeordnet werden. Je nachdem welches Sicherungselement vorgesehen ist, verbleibt eine Ausnehmung 68 (Fig. 5) oder eine Ausnehmung 70 (Fig. 6) zur Aufnahme der Vorderradachse. Auch hierdurch ist es möglich, die Vorderradachse in zwei unterschiedliche Positionen aufzunehmen.

Auch bei einer weiteren Konfiguration (Fig. 7), die nicht Teil der Erfindung ist, ist dies möglich. Hierbei ist in dem Ausfallende 16 der Fahrradgabel 14 eine in Seitenansicht T-förmige Ausnehmung 72 vorgesehen. Die Ausnehmung 72 weist zwei Ansätze 74, 76 auf, wobei die Vorderradachse in einer der beiden Ausnehmungen angeordnet sein kann. Auch hierdurch ist es möglich, die Vorderradachse in unterschiedlichen Positionen anzuordnen. Der verbleibende Bereich kann wiederum durch ein Sicherungselement entsprechend den Elementen 64, 66 ausgefüllt sein, um ein ungewolltes Verschieben der Vorderradachse sicherzustellen.

## Patentansprüche

1. Fahrradgabel, insbesondere Rennrad-Fahrradgabel, mit
zwei über eine Gabelbrücke (12) miteinander verbundenen Gabelbeinen (14) und
an den jeweiligen Ausfallenden (16) der Gabelbeine (14) vorgesehenen Ausnehmungen (18, 62, 72) zur Aufnahme einer Vorderradachse,
wobei die Ausnehmung eine Breite aufweist größer als der Durchmesser der Vorderradachse
**dadurch gekennzeichnet, dass**
die Ausnehmungen (18, 62, 72) derart ausgebildet sind, dass in den Ausnehmungen (18) jeweils ein Positionierelement (26) angeordnet ist, das in unterschiedlichen Positionen in der Ausnehmung (18) angeordnet werden kann und/ oder austauschbar ist,
das Positionierelement (26) die jeweilige Ausnehmung (18, 28) teilweise ausfüllt, sodass eine schlitzförmige nach unten offene Öffnung (28) ausgebildet ist und in die Öffnung (28) von unten ein Einstecken der Vorderradachse erfolgt, sodass die Vorderradachse zur Veränderung des Nachlaufs in unterschiedlichen Positionen fixierbar ist.

2. Fahrradgabel nach Anspruch 1, **dadurch gekennzeichnet, dass** die Positionierelemente (26) jeweils über ein Befestigungselement (46) insbesondere eine Schraube in dem jeweiligen Ausfallende (16) der Gabelbeine (14) fixiert sind.

3. Fahrradgabel nach Anspruch 1 oder 2, **dadurch gekennzeichnet, dass** die Ausfallenden (16) jeweils ein vorzugsweise hartes Material wie Metall aufweisendes Halteelement aufweisen, wobei die jeweilige Ausnehmung (18) in dem Halteelement (32) vorgesehen ist.

4. Fahrradgabel nach Anspruch 2 und 3, **dadurch gekennzeichnet, dass** das Befestigungselement (46) in dem Halteelement (32) fixiert ist.

5. Fahrradgabel nach einem der Ansprüche 1 bis 4, **dadurch gekennzeichnet, dass** das Positionierelement (26) in Seitenansicht im Wesentlichen L-förmig ausgebildet ist.

6. Fahrradgabel nach einem der Ansprüche 1 bis 5, **dadurch gekennzeichnet, dass** das Positionierelement (26) eine in Richtung der Gabelbrücke (12) weisende, bogenförmige insbesondere kreisbogenförmige Achs-Anlagefläche (36) aufweist.

7. Fahrradgabel nach Anspruch 6, **dadurch gekennzeichnet, dass** die Achs-Anlagefläche (36) einen Bogen von 90° bis 180° insbesondere 120° bis 140° ausbildet.

8. Fahrradgabel nach Anspruch 6 oder 7, **dadurch gekennzeichnet, dass** das Positionierelement (26) im Bereich der Achs-Anlagefläche (36) eine Durchgangsbohrung (50) zum Durchführen des Befestigungselements (46) aufweist.

9. Fahrradgabel nach einem der Ansprüche 1 bis 8, **dadurch gekennzeichnet, dass** das Positionierelement (26) in Richtung der Gabelbrücke (12) aufeinander zulaufende Klemmflächen (56) aufweist, die an korrespondierenden Klemmflächen (58) der Ausnehmung (18) anliegen.

10. Fahrradgabel nach einem der Ansprüche 1 bis 9, **gekennzeichnet durch** einen Spalt zwischen einer Oberseite (60) des Positionierelements (26) und einer Innenseite (22) der Ausnehmung (18).

11. Fahrradgabel nach einem der Ansprüche 1 bis 10, **dadurch gekennzeichnet, dass** durch Anordnen der Vorderradachse in unterschiedlichen Positionen eine Nachlaufänderung um mehr als 4 mm und bevorzugt mehr als 5 mm erfolgt.

12. Fahrradgabel, nach einem der Ansprüche 1 bis 11, **dadurch gekennzeichnet, dass** insbesondere beide Positionierelemente (26) jeweils einen nach außen weisenden Ansatz (40) aufweisen, um ein Herausrutschen der Vorderradachse nach unten zu vermeiden.

## Claims

1. A bicycle fork, particularly a bicycle fork for a racing bicycle, comprising two fork legs (14) connected to each other by a fork bridge (12), and recesses (18, 62, 72) provided on the respective dropout ends (16) of the fork legs (14) for receiving a front wheel axis,
wherein the recess has a width larger than the diameter of the front wheel axis,
**characterized in that**
the recesses (18, 62, 72) are designed in such a manner that the recesses (18) have a respective positioning element (26) disposed in them which is adapted to be arranged in different positions in the recess (18) and/or is exchangeable,
the positioning element (26) partially fills the respective recess (18, 28) in a manner forming a slit-shaped, downwardly open opening (28) and causing the front wheel axis to be inserted into the opening (28) from below so that the front wheel axis can be fixed in different positions for changing the trail.

2. The bicycle fork according to claim 1, **characterized in that** the positioning elements (26) are each fixed in the respective dropout end (16) of the fork legs (14) via a fastening element (46), particularly a screw.

3. The bicycle fork according to claim 1 or 2, **characterized in that** the dropout ends (16) respectively have a holding element comprising a preferably hard material such as e.g. metal, wherein the respective recess (18) is provided in the holding element (32).

4. The bicycle fork according to claim 2 and 3, **characterized in that** the fastening element (46) is fixed in the holding element (32).

5. The bicycle fork according to any one of claims 1 to 4, **characterized in that** the positioning element (26) is substantially L-shaped in lateral view.

6. The bicycle fork according to any one of claims 1 to 5, **characterized in that** the positioning element (26) comprises an axis abutment face (36) facing towards the fork bridge (12) and having the shape of an arc or circular arc.

7. The bicycle fork according to claim 6, **characterized in that** the axis abutment face (36) forms an arc of 90° to 180°, particularly 120° to 140°.

8. The bicycle fork according to claim 6 or 7, **characterized in that** the positioning element (26) comprises, in the region of the axis abutment face (36), a through bore (50) for passing the fastening element (46) through it.

9. The bicycle fork according to any one of claims 1 to 8, **characterized in that** the positioning element (26) comprises clamping surfaces (56) extending toward each other in the direction of the fork bridge (12) and arranged in abutment on corresponding clamping surfaces (58) of the recess (18).

10. The bicycle fork according to any one of claims 1 to 9, **characterized by** a gap between a top side (60) of the positioning element (26) and an inner side (22) of the recess (18).

11. The bicycle fork according to any one of claims 1 to 10, **characterized in that** the arranging of the front wheel axis in different positions is effective to cause a change of the trail by more than 4 mm and preferably more than 5 mm.

12. The bicycle fork according to any one of claims 1 to 11, **characterized in that** particularly both of the positioning elements (26) comprise a respective outward projection (40) to prevent the front wheel axis from sliding out in downward direction.

## Revendications

1. Fourche de vélo, notamment fourche de vélo de course, avec
deux bras de fourche (14) reliés entre eux par un pont de fourche (12) et
des évidements (18, 62, 72) prévues aux terminaisons respectives (16) des bras de fourche (14), pour recevoir un axe de roue avant,
l'évidement ayant une largeur supérieure au diamètre de l'axe de roue avant,
**caractérisée en ce que**
les évidements (18, 62, 72) sont configurés de façon que, dans les évidements (18), un élément de positionnement (26) respectif soit disposé qui peut être disposé dans des positions différentes dans l'évidement (18) et/ou est échangeable,
l'élément de positionnement (26) remplit l'évidement respectif (18, 28) partiellement, si bien qu'une ouverture (28) ayant la forme d'une fente ouverte vers le bas soit formée et qu'une insertion de l'axe de roue avant dans l'ouverture (28) soit effectuée par le bas, si bien que l'axe de roue avant puisse être fixé dans différentes positions pour régler le suivi.

2. Fourche de vélo selon la revendication 1, **caractérisée en ce que** les éléments de positionnement (26) sont fixés chacun dans la terminaison (16) respective des jambes de fourche (14) par un élément de fixation (46), notamment une vis.

3. Fourche de vélo selon la revendication 1 ou 2, **caractérisée en ce que** les terminaisons (16) comprennent chacune un élément de maintien comportant un matériau de préférence dur tel que du métal, l'évidement (18) respectif étant prévu dans l'élément de maintien (32).

4. Fourche de vélo selon la revendication 2 et 3, **caractérisée en ce que** l'élément de fixation (46) est fixé dans l'élément de maintien (32).

5. Fourche de vélo selon l'une des revendications 1 à 4, **caractérisée en ce que** l'élément de positionnement (26) est formé sensiblement en L, vu de côté.

6. Fourche de vélo selon l'une des revendications 1 à 5, **caractérisée en ce que** l'élément de positionnement (26) comprend une surface d'appui (36) pour l'axe, qui présente une forme en arc, notamment en arc de cercle, orientée en direction du pont de fourche (12).

7. Fourche de vélo selon la revendication 6, **caractérisée en ce que** la surface d'appui (36) pour l'axe forme un arc de 90° à 180°, notamment de 120° à 140°.

8. Fourche de vélo selon la revendication 6 ou 7, **caractérisée en ce que** l'élément de positionnement (26) comprend, dans la zone de la surface d'appui (36) pour l'axe, un trou de passage (50) pour le passage de l'élément de fixation (46).

9. Fourche de vélo selon l'une des revendications 1 à 8, **caractérisée en ce que** l'élément de positionnement (26) comprend des surfaces de serrage (56) se rapprochant en direction du pont de fourche (12) qui sont en appui sur des surfaces de serrage (58) correspondantes de l'évidement (18).

10. Fourche de vélo selon l'une des revendications 1 à 9, **caractérisée par** une fente entre une face supérieure (60) de l'élément de positionnement (26) et une face intérieure (22) de l'évidement (18).

11. Fourche de vélo selon l'une des revendications 1 à 10, **caractérisée en ce que**, par une disposition de l'axe de roue avant dans différentes positions, un changement du suivi de plus que 4 mm et de préférence de plus que 5 mm peut être obtenu.

12. Fourche de vélo selon l'une des revendications 1 à 11, **caractérisée en ce que** notamment les deux éléments de positionnement (26) comprennent chacun une excroissance (40) pour éviter un glissement de l'axe de roue avant vers le bas.
